# EUROPÄISCHE PATENTSCHRIFT

(11) **EP 0 589 297 B1**
(45) Veröffentlichungstag und Bekanntmachung des Hinweises auf die Patenterteilung: **06.08.1997**
(21) Anmeldenummer: 93114524.7
(22) Anmeldetag: 09.09.1993
(51) Int. Cl.: F02P 5/15, B60G 17/015, F16F 15/02

(54) **Verfahren zur Unterdrückung von Schwingungen in Antriebsstrang eines Kraftfahrzeuges**
Method for the suppression of vibrations in the drive train of a motor vehicle by ignition point control
Méthode pour la suppression de vibration dans l'arbre de transmission d'un véhicule automobile par le contrôle du point d'allumage

(30) Priorität: 25.09.1992 DE 4232204
(43) Veröffentlichungstag der Anmeldung: 30.03.1994
(73) Patentinhaber: SIEMENS AKTIENGESELLSCHAFT, 80333 München (DE)
(72) Erfinder: Treinies, Stefan, D-93073 Neutraubling (DE); Wier, Manfred, Dr., D-93173 Wenzenbach (DE)

(56) Entgegenhaltungen:
- EP-A- 0 216 291
- WO-A-91/15676
- DE-A- 3 018 033
- DE-A- 4 009 791
- DE-A- 4 009 792
- DE-A- 4 201 861
- GB-A- 2 227 284
- US-A- 4 498 438

## Beschreibung

Die Erfindung betrifft ein Verfahren nach dem Oberbegriff von Anspruch 1.

Ein solches bekanntes Verfahren dient zur Unterdrückung von Schwingungen im Antriebsstrang eines Kraftfahrzeugs, dessen Motordrehzahl von einem Sensor erfaßt wird (DE-A 40 09 791). Es wird die als Zähler-wert vorliegende Motordrehzahl nach der Zeit differenziert, und dann werden Extrema der Beschleunigung ermittelt. Bei einem Maximum der Beschleunigung wird auf ein zweites Kennfeld umgeschaltet, das nach spät verschobene Zündzeitpunkte enthält und damit eine Verringerung des Motordrehmoments bewirkt. Bei einem Minimum der Beschleunigung wird auf ein erstes Kennfeld mit Zündzeitpunkt für ein höheres Motordrehmoment zurückgeschaltet. Die dabei erforderliche Ermittlung von Extremwerten ist recht aufwendig und ausserdem müssen diese Extremwerte noch mit vier verschiedenen Schwellwerten verglichen werden. Auch kann bei diesem Verfahren eine Abhängigkeit der Ruckelneigung des Kraftfahrzeugs, d. h. der Neigung zu Schwingungen des Antriebsstrangs, nicht berücksichtigt werden.

Mit einer bekannten Vorrichtung zur Einstellung des Drehmomentes einer Brennkraftmaschine (DE-A 30 18 033) soll ein sich beim Schalten eines automatischen Getriebe einstellender Schaltruck vermindert werden. Es wird der zeitliche Abfall der Motordrehzahl, d. h. ein negativer Motordrehzahlgradient, erfaßt und dann das Motordrehmoment reduziert, wenn der Motordrehzahlgradient bei vorliegendem Schaltbefehl einen vorgegebenen Sollwert überschreitet. Der Schwellwert des Motordrehzahlgradienten kann in Abhängigkeit von der Motordrehzahl und der Last eingestellt werden, da die Schaltpunkte eines automatischen Getriebes bekannterweise in Abhängigkeit von der Motordrehzahl und der Last festgelegt werden.

Bei einer bekannten Motorsteuerung (GB-A 2 227 284) wird ein Zündeingriff zum Unterdrücken von Beschleunigungsruckeln durchgeführt. Der Zündzeitpunkt wird bei einem vorgegebenen Anstieg der Motordrehzahl nach spät verschoben. Die mittlere Änderung der Motordrehzahl ergibt einen Basis-Beschleunigungswert. Ein Beschleunigungs-Schwellwert wird als Funktion des Drosselklappenwinkels gebildet und plötzliche Drehzahlanstiege werden mit dem Basis-Beschleunigungswert und dem Beschleunigungs-Schwellwert verglichen. Tritt ein Drehzahlanstieg das erste mal, nachdem das Beschleunigungssignal den Beschleunigungs-Schwellwert überschritten hat, auf, wird der Zündzeitpunkt um einen Ausgangsverzögerungswinkel verspätet. Überschreiten der zweite oder weitere Drehzahlanstiege den Basis-Beschleunigungswert, so wird der Zündzeitpunkt um einen Sekundärverzögerungswinkel verspätet. Der Basis-Beschleunigungswert wird als Mittelwert mehrerer Drehzahlanstiege berechnet, der Sekundärverzögerungswinkel hängt von der Größe des letzten Drehzahlanstiegs ab.

Bei einem ebenfalls bekannten Verfahren zur Unterdrückung von Schwingungen im Antriebsstrang eines Kraftfahrzeuges (DE 40 09 792 A1) wird die Motordrehzahl ausgewertet und beim Auftreten solcher Schwingungen in einer Korrektureinrichtung eine Stellgröße erzeugt, die das Motormoment ändert. Der einem Kennfeld entnommene Zündzeitpunkt wird beim Auftreten von Motorbeschleunigungen, die um einen Gleichbeschleunigungsanteil bereinigt sind, mit einem Korrekturfaktor zu der Stellgröße für den Motor verknüpft.

Die Schwingungen im Antriebsstrang eines Kraftfahrzeugs, die durch Lastwechsel im Antrieb und durch Fahrbahneinflüsse beim Fahrbetrieb verursacht werden, sind drehzahlabhängig. Die auch als Rukkeln bezeichneten Schwingungen können vor allem bei einem abrupten Übergang von niedriger Teillast auf Vollast im unteren Drehzahlbereich - d.h. vor allem während des Anfahrvorgangs - auftreten.

Der Erfindung liegt die Aufgabe zugrunde, ein Verfahren zum Unterdrücken von Schwingungen im Antriebsstrang eines Kraftfahrzeugs zu schaffen, das die Drehzahlabhängigkeit der Schwingungsneigung berücksichtigt.

Diese Aufgabe wird erfindungsgemäß durch das Verfahren nach Anspruch 1 gelöst.

Vorteilhafte Weiterbildungen der Erfindung sind den Unteransprüchen zu entnehmen.

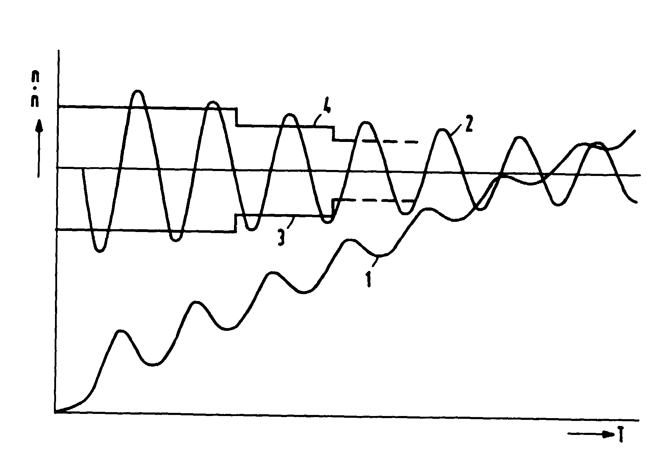

Ein Ausführungsbeispiel der Erfindung wird im folgenden unter Bezugnahme auf die Zeichnung erläutert. Die einzige Figur zeigt in Form eines Diagramms den zeitlichen Verlauf der Motordrehzahl und des als Segmentzeitgradienten gemessenen Drehzahlgradienten eines Kraftfahrzeugs beim Anfahren.

Die Drehzahl 1 (Figur) des Motors steigt kontinuierlich an, es ist aber ersichtlich, daß von dem Antriebsstrang des Fahrzeugs herrührende Einflüsse deutliche Drehzahlschwigungen verursachen, die zu dem bekannten Ruckeln des Antriebs bei niedrigen Drehzahlen führen.

In der Motorsteuerungstechnik wird die Drehzahl 1 üblicherweise in Form von Segmentzeiten bearbeitet, die dem Winkelabstand zwischen zwei Markierungen auf der Kurbelwelle entsprechen. Die Messung erfolgt z.B. mit einem induktiven Sensor, der die Zähne am Umfang eines auf der Kurbelwelle befestigten Zahnrads erfaßt. Bei einem Sechszylindermotor entspricht eine Segmentzeit einem Winkel von 120° auf der Kurbelwelle KW, bei einem Fünfzylinder einem Winkel von 144° KW und bei einem Vierzylinder einem Winkel von 180° KW.

Die Drehgeschwindigkeit 2 des Motors wird entsprechend in Form eines Segmentzeitgradienten abgeleitet und verarbeitet. Für diesen Segmentzeitgradienten wird bei dem vorliegenden Verfahren ein unterer Grenz- oder Schwellwert 3 festgelegt, bei der eine "Antiruckel"-Funktion in noch zu beschreibender Weise aktiviert wird. Außerdem wird für den Drehzahl- oder Segmentzeitgradienten ein oberer Grenzwert oder Schwelle 4 festgelegt, bei dem die genannte Funktion beendet oder deaktiviert wird.

Im normalen Betrieb wird der Zündwinkel des Motors von einem Zündsteuergerät gemäß einem ersten Kennfeld gesteuert, in dem der Basiszündwinkel in Abhängigkeit von der Drehzahl und dem angesaugten Luftmassenstrom abgelegt ist. Werden Ruckelschwingungen im Antriebsstrang - wie nachgehend beschrieben - festgestellt, so wird in dem Zündsteuergerät des Motors auf ein zweites Zündkennfeld umgeschaltet, in dem, ebenfalls in Abhängigkeit von der Drehzahl und dem Luftmassenstrom, nach spät verschobene Zündzeitpunkte abgelegt sind, die eine Verringerung des Motordrehmoments und damit eine Dämpfung der Schwingungen im Antriebsstrang bewirken.

Für das Steuern des Zündzeitpunktes nach dem zweiten Zündkennfeld müssen folgende Bedingungen erfüllt sein:
- Die Kühlwassertemperatur muß oberhalb eines vorgegebenen Mindestwertes liegen, und
- die Motordrehzahl muß sich innerhalb eines vorgegeben Bereiches befinden.

Unterschreitet der Segmentzeitgradient den vorgegebenen unteren Schwellwert 3, so wird von dem ersten oder Basis-Zündkennfeld auf das zweite Zündkennfeld umgeschaltet, und zwar ohne eine Zündwinkeländerungsbegrenzung durchzuführen. Beim Aktivieren der Antiruckel-Funktion, d.h. beim Umschalten auf ein zweites Zündkennfeld, das ein verringertes Motordrehmoment ergibt, wird die Zündwinkeländerungsgeschwindigkeit auf einen Wert begrenzt.

Das Umschalten auf das zweite Zündkennfeld kann um eine vorgebbare Anzahl von Segmentzeiten oder Arbeitszyklen des Motors verzögert werden, zum Beispiel um 1 bis 3 Segmentzeiten. Dabei entspricht eine Segmentzeit bei einem 6-Zylinder-Motor bei 1200 U/min einer Zeitdauer von etwa 17 msec.

Beim Aktivieren der Antiruckel-Funktion kann andererseits auch der Zündwinkel nach spät verstellt werden, und zwar um einen Betrag, der von der Drehzahl abhängig ist. Die Verstellung erfolgt auch hier mit einer Begrenzung der Änderungsgeschwindigkeit. Hierbei darf aber ein Zündwinkelmindestwert nicht unterschritten werden, da sonst eine unvollständige Verbrennung stattfinden könnte, die z.B. den Katalysator schädigen würde.

Wird das Aktivieren der Antiruckel-Funktion um einige Segmentzeiten verzögert, so erfolgt das Umschalten des Zündkennfeldes oder das Spätverstellen des Zündwinkels ohne Begrenzung der Zündwinkeländerungsgeschwindigkeit.

Überschreitet der Segmentzeitgradient den vorgegebenen oberen Schwellwert 4, so wird die Antiruckel-Funktion beendet oder deaktiviert. Dabei wird auf das erste oder Basiszündkennfeld zurückgeschaltet, und zwar unter Beibehaltung der allgemeinen Zündwinkeländerungsbegrenzung.

Der obere Schwellwert ist nicht konstant, sondern in Abhängigkeit von der Motordrehzahl vorgegeben. Für höhere Drehzahlen nimmt er kleinere Werte als bei kleinen Drehzahlen an. Auch der untere Schwellwert, der in der Zeichnung durch die Linie 3 dargestellt ist, ist von der Drehzahl abhängig vorgegeben, bei höheren Drehzahlen nimmt er größere Werte an als bei kleinen Drehzahlen im Bereich der Anlaßdrehzahl.

Auch das Beenden oder Inaktivieren der Antiruckel-Funktion kann verzögert - und zwar um ein vorgebbare Anzahl von Segmentzeiten oder Motorzyklen nach Überschreiten des oberen Schwellwerts - erfolgen. Ist die Antiruckel-Funktion nach einer vorgegebenen Maximalzeit, von dem Aktivierungszeitpunkt an gezählt, noch nicht beendet, so wird sie abgebrochen und mit Zündwinkeländerungsbegrenzung auf das erste Kennfeld zurückgeschaltet. Oder aber der Zündwinkel wird um den drehzahlabhängigen Betrag wieder nach früh verstellt, und zwar mit Begrenzung der Zündwinkel-Anderungsgeschwindigkeit.

Das vorstehend beschriebene Verfahren zum Unterdrücken von Schwingungen des Antriebsstranges (sog. Ruckeln) eines Kraftfahrzeuges sei nun kurz zusammengefaßt: Aus der Motordrehzahl eines Kraftfahrzeugs wird der Drehzahlgradient (in Form eines Segmentzeitgradienten) abgeleitet. Durch Auswerten dieses Gradienten werden Antriebsstrangschwingungen erkannt. Unterschreitet er einen unteren Grenzwert, so wird der Zündwinkel nach spät verstellt, z.B. durch Umschalten von einem Basiszündkennfeld auf ein zweites Zündkennfeld, und damit eine Verringerung des Motordrehmomentes bewirkt. Überschreitet der Drehzahlgradient einen oberen Grenzwert, so wird der Zündwinkel wieder nach früh verstellt oder es wird auf das Basiszündkennfeld zurückgeschaltet. Oberer und unterer Grenzwert sind abhängig von der Motordrehzahl, ebenso die Beträge der Zündwinkeländerungen.

## Patentansprüche

1. Verfahren zum Unterdrücken von Schwingungen des Antriebsstranges eines Kraftfahrzeuges, bei dem die Drehzahl des Kraftfahrzeug-Motors erfaßt, aus der Drehzahl der Drehzahlgradient abgeleitet und ausgewertet wird, und bei Erkennen unzulässiger Schwingungen durch Umschalten zwischen einem ersten und einem zweiten Kennfeld, in dem nach spät verstellte Zündzeitpunkte gespeichert sind, das Drehmoment des Motors verringert und Vergrößert wird, wobei die Drehmomentveränderungen in Abhängigkeit von Grenzwerten für den Drehzahlgradienten gesteuert werden, **dadurch gekennzeichnet**,
- daß wenn der Drehzahlgradient einen unteren Grenzwert (3) unterschreitet, der Zündwinkel durch Umschalten von einem ersten Kennfeld, in dem Basiszündwinkel des Motors gespeichert sind, auf das zweite Kennfeld nach spät verstellt wird,
- daß wenn nach Unterschreiten des unteren Grenzwerts der Drehzahlgradient einen oberen Grenzwert (4) überschreitet, der Zündwinkel durch Umschalten auf das erste Kennfeld auf den Basiswert zurückgeführt wird, und
- daß der obere und der untere Grenzwert von der Motordrehzahl abhängig derart vorgegeben werden, daß bei höheren Drehzahlen der untere Grenzwert größere Werte und der obere Grenzwert kleinere Werte als bei kleinen Drehzahlen annehmen.

2. Verfahren nach Anspruch 1, dadurch gekennzeichnet, daß der Betrag, um den der Zündwinkel nach spät verstellt wird, von der Drehzahl abhängig ist.

3. Verfahren nach Anspruch 1, dadurch gekennzeichnet, daß die Verstellung des Zündwinkels um eine vorgegebene Zeitspanne verzögert wird.

4. Verfahren nach Anspruch 1, dadurch gekennzeichnet, daß der Zündwinkel nach Überschreiten einer vorgegebenen Maximalzeit, auch ohne daß der obere Grenzwert von dem Drehzahlgradient überschritten wird, auf den Basiszündwinkel zurück verstellt wird.

5. Verfahren nach Anspruch 1, dadurch gekennzeichnet, daß der Zündwinkel mit Begrenzung seiner Änderungsgeschwindigkeit verstellt wird.

6. Verfahren nach Anspruch 1, dadurch gekennzeichnet, daß bei dem Spätverstellen des Zündwinkels ein Mindestzündwinkel nicht unterschritten wird.

## Claims

1. Method for suppressing vibrations in the drive train of a motor vehicle, in which method the rotational speed of the engine of the motor vehicle is determined, the rotational speed gradient is derived from the rotational speed and evaluated, and when unacceptable vibrations are detected the engine torque is reduced and increased by switching between a first and a second characteristic diagram in which ignition points which have been adjusted in the late direction are stored, the changes in torque being controlled as a function of limit values for the rotational speed gradient, characterized
- in that, if the rotational speed gradient drops below a lower limit value (3), the ignition angle is adjusted in the late direction by switching from a first characteristic diagram, in which basic ignition angles of the engine are stored, to the second characteristic diagram,
- in that, if after dropping below the lower limit value, the rotational speed gradient exceeds an upper limit value (4), the ignition angle is returned to the basic value by switching to the first characteristic diagram, and
- in that the upper and the lower limit values are prescribed as a function of the engine speed such that at relatively high rotational speeds the lower limit value assumes larger values and the upper limit value assumes lower values than at low rotational speeds.

2. Method according to Claim 1, characterized in that the amount by which the ignition angle is adjusted in the late direction is dependent on the rotational speed.

3. Method according to Claim 1, characterized in that the adjustment of the ignition angle is delayed by a prescribed time period.

4. Method according to Claim 1, characterized in that, after a prescribed maximum time has been exceeded, the ignition angle is adjusted back to the basic ignition angle even if the upper limit value of the rotational speed gradient has not been exceeded.

5. Method according to Claim 1, characterized in that the ignition angle is adjusted with limitation of its rate of change.

6. Method according to Claim 1, characterized in that when the ignition angle is adjusted in the late direction it does not drop below a minimum ignition angle.

## Revendications

1. Procédé permettant de supprimer les fluctuations de la ligne d'entraînement d'un véhicule automobile, selon lequel le régime du moteur de véhicule automobile est relevé, le gradient de régime est déduit du régime et exploité et, en cas de reconnaissance de fluctuations inadmissibles, le couple du moteur est réduit ou augmenté au moyen d'une commutation entre une première table caractéristique et une seconde table caractéristique dans laquelle sont rangés en mémoire des instants d'allumage décalés vers un retard, les variations de couple étant commandées en fonction de valeurs limites pour les gradients de régime, caractérisé
- en ce que, lorsque le gradient de régime franchit vers le bas une valeur limite inférieure (3), l'angle d'allumage est décalé vers un retard au moyen d'une commutation d'une première table caractéristique, dans laquelle des angles d'allumage de base du moteur sont rangés en mémoire, vers une seconde table caractéristique,
- en ce que, lorsqu'après avoir franchi vers le bas la valeur limite inférieure, le gradient de régime franchit une valeur limite supérieure (4), l'angle d'allumage est ramené à la valeur de base au moyen d'une commutation vers la première table caractéristique et
- en ce que la valeur limite supérieure et la valeur limite inférieure sont préfixées en fonction du régime moteur de façon telle que, pour des régimes plus hauts, la valeur limite inférieure prend des valeurs plus grandes, et la valeur limite supérieure prend des valeurs plus petites, que pour de bas régimes.

2. Procédé selon la revendication 1, caractérisé en ce que la valeur dont l'angle d'allumage est décalé vers un retard, dépend du régime.

3. Procédé selon la revendication 1, caractérisé en ce que le décalage de l'angle d'allumage est retardé d'un intervalle de temps préfixé.

4. Procédé selon la revendication 1, caractérisé en ce qu'après dépassement d'un temps maximal préfixé, même sans que la valeur limite supérieure du gradient de régime ait été franchie, l'angle d'allumage est ramené à l'angle d'allumage de base.

5. Procédé selon la revendication 1, caractérisé en ce que l'angle d'allumage est décalé avec une limitation de sa vitesse de variation.

6. Procédé selon la revendication 1, caractérisé en ce que, lors du décalage de l'angle d'allumage vers un retard, un angle d'allumage minimal n'est pas franchi vers le bas.
